**Europäisches Patentamt**

(19) **European Patent Office**

**Office européen des brevets**

(11) Publication number: **0 060 892**

**A1**

# (12) EUROPEAN PATENT APPLICATION

published in accordance with Art. 158(3) EPC

(21) Application number: **81902600.6**

(22) Date of filing: **21.09.81**

Data of the international application taken as a basis:

(86) International application number:
**PCT/JP81/00243**

(87) International publication number:
**WO82/01263 (15.04.82 82/10)**

(51) Int. Cl.³: **G 05 B 19/403**

(30) Priority: **25.09.80 JP 133331/80**

(43) Date of publication of application:
**29.09.82 Bulletin 82/39**

(84) Designated Contracting States:
**DE FR GB**

(71) Applicant: **FUJITSU FANUC LIMITED**
**5-1, Asahigaoka, 3-chome**
**Hino-shi, Tokyo 191(JP)**

(72) Inventor: **NOZAWA,Ryoichiro**
**12-1-2105 Sarugaku-cho**
**Shibuya-ku Tokyo 150(JP)**

(72) Inventor: **NAGAMINE, Tsuyoshi**
**11-9, Owada-cho 7-chome**
**Hachioji-shi Tokyo 192(JP)**

(72) Inventor: **KAWAMURA, Hideaki**
**1375-5, Narahara-cho**
**Hachioji-shi Tokyo 193(JP)**

(72) Inventor: **MIYATA, Mitsuto**
**Room 38-4 Nanyodai 1768-149, Shimoyugi**
**Hachioji-shi Tokyo 192-03(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **KEYBOARD-INFORMATION INPUT DEVICE IN A NUMERICAL CONTROL UNIT.**

(57) Improvement in a keyboard-information input device in an NC unit. A key-line of a series is registered in a key-line memory circuit (14) in relation to a special key, so that the key-line can be input by merely pushing the special key. In the registration of the key-line to be reproduced, after a search circuit (15) searches and detects that the input key is registered as the reproduction-start key, each key is taken out from the stored key-line one by one to be reproduced and sequentially input to a key-input circuit (17), and this operation is continued until the memory-end key is read out, so that it can be freely operated at the user's discretion. Thus, the function of the control panel can be expanded to be more freely operated at the user's discretion.

./...

FIG. 1

0060892
TITLE MODIFIED
see front page

S P E C I F I C A T I O N

KEY INFORMATION INPUT DEVICE FOR NUMERICAL CONTROLLER

TECHNICAL FIELD

The present invention relates to improvement in a
key information input device for a numerical controller.

TECHNICAL BACKGROUND

.Generally, in a numerical controller, editing and
correction data of command tape information and other data on
working are manually entered from a keyboard provided on an
operator panel of the numerical controller, separately of
entering of a command tape information from a tape reader.
By the way, in this case, the manual data are usually set by
sequentially entering information of a train of keys following
a certain format, but such an operation is relatively troublesome and, in the case of the key train being long, an erroneous
key operation is likely to occur.  It is evident that if such
an operation could be simplified, maneuverability of the numerical
controller would markedly be improved.

DISCLOSURE OF THE INVENTION

The present invention has been initiated from such a
viewpoint, and has for its object to permit simplification of
the input operation of a train of keys frequently used, thereby
enabling the user to freely enlarge the function of the operator
panel of the numerical controller.  According to the present
invention, a train of keys are registered in a key storage circuit corresponding to a certain specified key, and the key train can subsequently be inputted only by depressing the specified key.

## BRIEF DESCRIPTION OF THE DRAWINGS

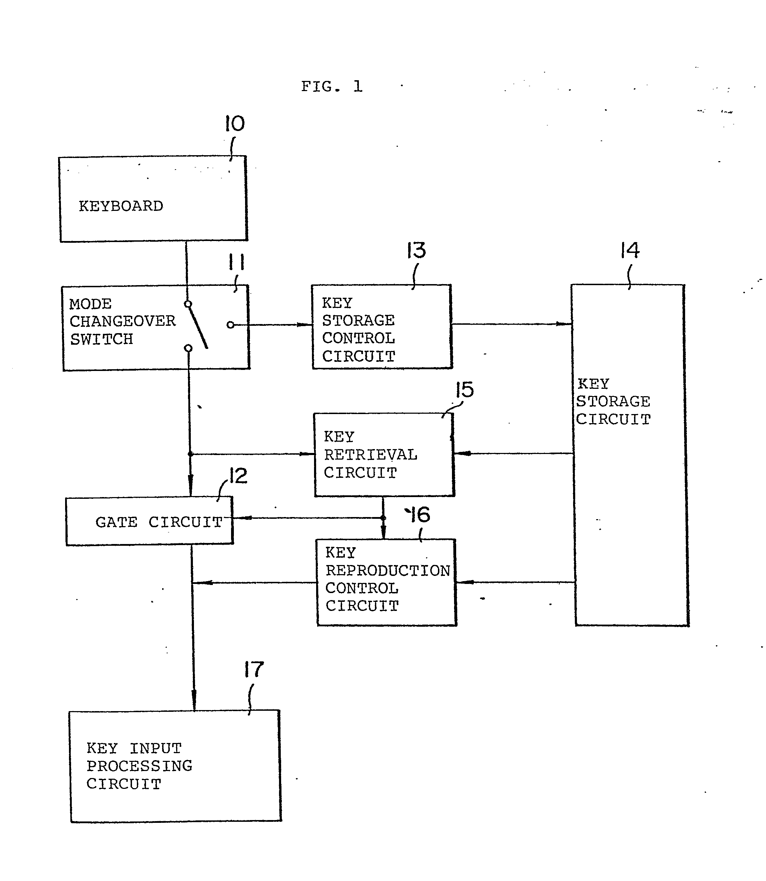

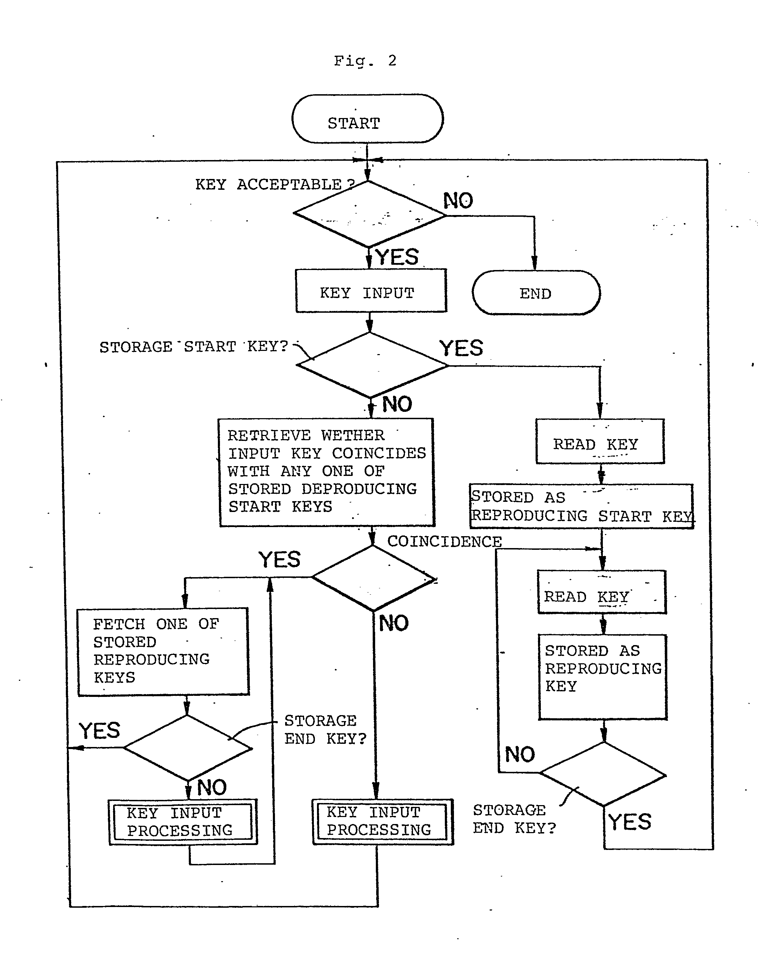

Fig. 1 is a block diagram illustrating the principal part of an embodiment of the present invention; and Fig. 2 is a flowchart showing the operation of another embodiment of the present invention.

## BRIEF DESCRIPTION OF THE DRAWINGS

For a detailed description of the present invention, its embodiments will hereinafter be described in detail.

Fig. 1 is a block diagram illustrating the principal part of an embodiment of the present invention. Reference numeral 10 indicates a keyboard; 11 designates a mode changeover switch; 12 identifies a gate circuit; 13 denotes a key storage control circuit; 14 represents a key storage circuit; 15 shows a key retrieval circuit; 16 referes to a key reproduction control circuit; and 17 signifies a key input processing circuit.

In Fig. 1, the keyboard 10 is provided for manual data entering use, for instance, on a front panel of a numerical control locker, and numeric keys 0 to 9 and some alphabet keys are arrangeded on the keyboard. The mode changeover switch 11 is to switch the input device to a teach mode and a reproducing mode. When set on the side of the teach mode, the mode changeover switch connects the keyboard 10 to the key storage control circuit 13 and when set to the side of the reproducing mode, it

connects the keyboard 10 to the gate circuit 12 and the key retrieval circuit 15.

The key storage control circuit 13, when in the teach mode, performs control for storing information of a reproducing start key entered from the keyboard 10 and information of a key train corresponding thereto in the key storage circuit 14 while making them to correspond to each other. The key storage circuit 14 is formed by a register or semiconductor memory.

The key retrieval circuit 15, when in the reproducing mode, retrieves whether key information entered from the keyboard 10 has been stored as that of a reproducing start key in the key storage circuit 14. In the case of the key having been stored as the reproducing start key, the key retrieval circuit instructs the key reproduction control circuit to reproduce the key information and, at the same time, closes the gate circuit 12 to prevent that the data of the keyboard is applied to the key input processing circuit 17. The key reproduction control circuit 16, when supplied with a signal from the key retrieval circuit 15, reads out the information of the reproducing keys from the key storage circuit 14 at regular time intervals or in a sequential order in accordance with a request from the key input processing circuit and provides them to the key input processing circuit 17. The key input processing circuit 17 is to process a key input and is substantially identical in construction and operation iwth those used in the past.

For example, in the case of simplifying a key input opration of such a tool exchange program as follows:

G28Y0Z0M06·INPUT·START

the mode changeover switch 11 is connected first to the side of the teach mode, and a reproducing start key, for instrance, information of a key A is entered form the keyboard 10 and, thereafter information of the abovesaid train of keys are entered in a sequential order. By the operation of the key storage control circuit 13, the key A and the subsequent train of keys are stored as a reproducing start key and as reproducing keys in the key storage circuit. Then, turning the mode changeover switch 11 down to the side of the reproducing mode and entering the information of the key A from the keyboard 10, the information of abovesaid key train stored corresponding to the key A is read out from the key storage circuit 14 by the operation of the key retrieval circuit 15 and the key reproducing circuit 16 and applied to the key input processing circuit 17. That is to say, once a train of keys have been registered corresponding to a certain specified key (a reproducing start key), information equivalent to that obtainable by a series of key operations can be automatically obtained only by depressing the specified key; accordingly, the key operation is markedly simplified. Since such registration as described above can easily be effected on the side of the user, the function of the operator panel of the numerical controller can freely be enlarged on the side of the user.

Incidentally, in the case where an input key from the keyboard 10 has not been registered as the reproducing start key in Fig. 1, the gate circuit 12 remains open, so that the input key information is applied as it is to the key input processing circuit 17.

Fig. 2 is a flowchart showing the operation of another embodiment of the present invention, which is arranged so that switching between the teach mode and the reproducing mode is effected by a specific key assigned as a storage start key. As shown in Fig. 2, when information of an input key from the keyboard is that of the storage start key, operations are carrued out in the teach mode and whne the inpt key information from the keyboard is not the storage start key information, operation are performed in the reproducing mode. in the case of the teach mode, an input key following the storage start key is registered as a reproducing start key and input keys following it are sequentially registered as reproducing keys. Scuh registration is continued until a specified key assigned as a storage end key is inputted.

In the reproducing mode, it is retrieved whether an input key has been registered as the reproducing start key and when it has not been registered, the key input is applied to the key input processing circuit. In the case of the input key having been registered, however, information of the reproducing keys are sequentially applied one by one to the key input processing circuit until the storage end key is read out. A circuit for performing such an operation can be constituted by wired logic, but since a one-chip microcomputer of high performance is available at low cost at present, the circuit can also be formed by soft logic using it.

As will be appreciated from the foregoing description, according to the present invention, once a train of keys are stored in a key storage circuit corresponding to a certain specified key, information of the key train can be inputted subsequently only by depressing the specified key; therefore, the key operation is greatly simplified and erroneous key operations can be markedly reduced. Further, since the registration of the reproducing key train can freely be effected on the side of the user, the function of the operator panel of the numerical controller can be enlarged at will. Accordingly, the use of the present invention markedly improves the maneuverability of the numerical controller, and hence is of great utility.

CLAIM


A key information input device for a numerical controller, characterized by the provision of a key storage circuit capable of storing a train of keys corresponding to a specified key of a keyboard for operating the numerical controller, and key reproducing means for reading out the key stored in the key storage circuit for output to a key input processing circuit upon depression of the specified key.

FIG. 1

KEYBOARD 10

MODE CHANGEOVER SWITCH 11

KEY STORAGE CONTROL CIRCUIT 13

KEY STORAGE CIRCUIT 14

KEY RETRIEVAL CIRCUIT 15

GATE CIRCUIT 12

KEY REPRODUCTION CONTROL CIRCUIT 16

KEY INPUT PROCESSING CIRCUIT 17

Fig. 2

```
                    ┌──────────────┐
                    │    START     │
                    └──────┬───────┘
                           ▼
        KEY ACCEPTABLE ?
              ◇──────────────── NO ──────────┐
              │ YES                          ▼
       ┌──────────────┐              ┌──────────────┐
       │  KEY INPUT   │              │     END      │
       └──────┬───────┘              └──────────────┘
              ▼
   STORAGE START KEY? ◇──────── YES ──────────┐
              │ NO                             ▼
   ┌────────────────────┐            ┌──────────────┐
   │ RETRIEVE WETHER    │            │   READ KEY   │
   │ INPUT KEY COINCIDES│            └──────┬───────┘
   │ WITH ANY ONE OF    │                   ▼
   │ STORED DEPRODUCING │            ┌────────────────────┐
   │ START KEYS         │            │ STORED AS          │
   └────────┬───────────┘            │ REPRODUCING START  │
            ▼  COINCIDENCE           │ KEY                │
     YES ◇                          └──────┬─────────────┘
      │    │ NO                             ▼
      ▼                             ┌──────────────┐
 ┌──────────────┐                   │   READ KEY   │
 │ FETCH ONE OF │                   └──────┬───────┘
 │ STORED       │                          ▼
 │ REPRODUCING  │                   ┌──────────────┐
 │ KEYS         │                   │ STORED AS    │
 └──────┬───────┘                   │ REPRODUCING  │
        ▼   STORAGE                 │ KEY          │
  YES ◇     END KEY?                └──────┬───────┘
    │  │ NO                                ▼
    ▼  ▼                        NO ◇
 ┌──────────────┐  ┌──────────────┐   │
 │ KEY INPUT    │  │ KEY INPUT    │   STORAGE   │ YES
 │ PROCESSING   │  │ PROCESSING   │   END KEY?
 └──────────────┘  └──────────────┘
```

# INTERNATIONAL SEARCH REPORT

International Application No PCT/JP81/00243

## I. CLASSIFICATION OF SUBJECT MATTER (if several classification symbols apply, indicate all) 3

According to International Patent Classification (IPC) or to both National Classification and IPC

Int. Cl.³   G05B 19/403

## II. FIELDS SEARCHED

### Minimum Documentation Searched 4

| Classification System | Classification Symbols |
|---|---|
| I P C | G05B 15/00, 19/00 |

### Documentation Searched other than Minimum Documentation to the Extent that such Documents are included in the Fields Searched 5

| | |
|---|---|
| Jitsuyo Shinan Koho | 1926 – 1981 |
| Kokai Jitsuyo Shinan Koho | 1971 – 1981 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| Y | See JP, A, 54-117883 (Osumi Tekkosho Kabushiki Kaisha) 1979-9-12, page 3, columns 7, 8 and page 3, column 10 to page 4, column 11 | 1 |
| Y | See JP, A, 52-1288 (Oki Electric Industry Co., Ltd.) 1977-1-7, page 2, upper portion | 1 |
| Y | See JP, A, 51-62280 (Osumi Tekkosho Kabushiki Kaisha) 1976-5-29, page 3, columns 8, 9 | 1 |
| *"Y" | Document of particular relevancy; the claimed invention can not be considered to involve an inventive step when the document is combined with one or more other such documents, such combination being obvious to a person skilled in the art. | |

* Special categories of cited documents: 16

"A" document defining the general state of the art

"E" earlier document but published on or after the International filing date

"L" document cited for special reason other than those referred to in the other categories

"O" document referring to an oral disclosure, use, exhibition or other means

"P" document published prior to the International filing date but on or after the priority date claimed

"T" later document published on or after the International filing date or priority date and not in conflict with the application, but cited to understand the principle or theory underlying the invention

"X" document of particular relevance

## IV. CERTIFICATION

| Date of the Actual Completion of the International Search 2 | Date of Mailing of this International Search Report 2 |
|---|---|
| October 5, 1981 (05.10.81) | October 19, 1981 (19.10.81) |

| International Searching Authority 1 | Signature of Authorized Officer 20 |
|---|---|
| Japanese Patent Office | |

Form PCT/ISA/210 (second sheet) (October 1977)